# EUROPEAN PATENT SPECIFICATION

(11) **EP 2 823 705 B1**
(45) Date of publication and mention of the grant of the patent: **18.04.2018**
(21) Application number: 13757210.3
(22) Date of filing: 08.03.2013
(51) Int. Cl.: A01G 31/04, A01G 9/14

(54) **METHOD AND MODULAR STRUCTURE FOR CONTINUOUSLY GROWING AN AEROPONIC CROP**
VERFAHREN UND MODULARE STRUKTUR ZUR KONTINUIERLICHEN ZÜCHTUNG EINER AEROPONISCHEN KULTUR
PROCÉDÉ ET STRUCTURE MODULAIRE POUR DÉVELOPPEMENT D'UNE CULTURE AÉROPONIQUE EN CONTINU

(30) Priority: 09.03.2012 ES 201230360 P; 01.03.2013 ES 201330299 P
(43) Date of publication of application: 14.01.2015
(73) Proprietor: Aznar Vidal, Carlos, 50001 Zaragoza (ES)
(72) Inventor: Aznar Vidal, Carlos, 50001 Zaragoza (ES)
(74) Representative: Ungria López, Javier
(86) International application number: PCT/ES2013/070150
(87) International publication number: WO 2013/132133

(56) References cited:
- EP-A1- 1 123 649
- WO-A1-2009/019804
- ES-U- 1 069 610
- GB-A- 2 121 263
- US-A- 4 068 405
- US-A- 4 932 158
- US-A- 4 965 962
- US-A- 5 073 401

## Description

### Object of the invention

A procedure and modular structure for continuously growing an aeroponic crop is defined by the features of the respective independent claims 1 and 8. It comprises the following phases:
- Phase involving the preparation of the seeding area, positioning on the line and germination.
- Phase involving transfer and positioning on production bars.
- Phase involving distribution by level and row, vegetative growth and maturing.
- Phase involving irrigation and inspection.
- Phase involving guiding, transport of production bars and harvesting.
- Phase involving the cleaning and preparation of production bars and seed trays.

These phases initially take place on the bottom floor and during maturing on one or more successive floors of a modular structure positioned above the ground or beneath it.

It is an object of the invention to achieve a quality product in a sustainable manner by means of a facility provided with elements guaranteeing a large production capacity.

### Background to the invention

Soil-less crops are known at this moment in time and the best-known of them are hydroponic systems for their widespread use in the agricultural world as a means of maximising the use of the resources available to conventional agriculture. As is known, this is due to the fact that plants may grow and produce fruit in a nutrient solution, providing optimal results in terms of speed of growth and fruit yields, regardless of changes in the weather and seasonal variations, which do not affect crops of this type, which can be grown in thermally controlled environments, but with the drawback that these systems do not provide the roots with good aeration.

In these types of crops, nutrients may be supplied in a closed circuit, with the plants being totally insulated from the surrounding environment, which allows maximum use to be made of water and results in the absence of pests and disease, as the possibility of infection from the exterior is reduced, with the drawback that they are usually grown on a single floor, the result being that the production area and its insulation is very small.

Another drawback to take into consideration is that most of these types of farms are located in agricultural areas that are a long distance from cities and towns, which results in a series of costs added to the product, such as transport and distribution.

As an example of hydroponic crop procedures, the patents JP2003339258 and JP2004065265 present two hydroponic crop systems developed with totally automated systems, but with the drawback of being developed on one production level only.

Another example of hydroponic apparatus for growing crops is disclosed in the patent application with publication number GB 2121263A. This hydroponic apparatus includes racks for holding seed-bed trays, nutrient distribution manifolds having spray nozzles for spraying water and/or nutrient solution over the seed-bed trays.

### Description of the invention

In order to make more use of the production space and intensify the production of crops, a procedure and modular structure for continuously growing an aeroponic crop- the object of the present invention is defined by the features of the independent claims and comprises the following phases - has been designed:
- Phase involving the preparation of the seeding area, positioning on the line and germination,
- Phase involving transfer and positioning on production bars,
- Phase involving distribution by level and row, vegetative growth and maturing,
- Phase involving irrigation and inspection,
- Phase involving guiding, transport of production bars and harvesting,
- Phase involving the cleaning and preparation of production bars and seed trays,

These phases initially take place on the bottom floor and during maturing on one or more successive floors of a modular structure that may be positioned above the ground or beneath it, enabling the intensive use of the ground, by planting a crop on various levels, making maximum use of the area available, due to the fact that it can be located on any type of ground, thus allowing maximum use to be made of it for crop production and the optimising of resources.

Aeroponics is a crop-growing system that offers a major advantage over conventional hydroponic systems in that it allows excellent aeration of the roots. This is reflected by the fact that the amount of oxygen dissolved in water is measured in mg/L, or parts per million (ppm), this amount being 5-10 mg/L at 20°C, while the amount of oxygen dissolved in the air is measured as a percentage (21%), which tells us that the concentration of oxygen in the air is in the region of 20,000 times higher than the concentration of the same gas dissolved in water.

### Phase involving the preparation of the seeding area, positioning on the line and germination:

The seeds and the processed inorganic substrate, such as mineral wool, coconut fibre, etc, stored in specific climatic conditions, are collected and placed in a planting area, with, first of all, the substrate and then the seeds being deposited in the corresponding cavities of the seed trays, and the first irrigation being conducted, with the growing units being created as a result.

They are then positioned in the seedbed area, planted as a continuous line, and advance at a rate of one position a day, in accordance with their width dimensions, with the necessary days being allowed for the germination and development of the growing units, with plants being obtained every day at the end of the germination cycle, while the growing units increase in number in order to make up for defects in certain specimens that do not complete the germination and growth process satisfactorily.

### Phase involving transfer and positioning on production bars:

The growing units are removed from the seed trays and repositioned in the internal cavity of a support designed to be positioned on the production bars for their subsequent development.

The support has its position fixed on the production bars by means of a pipe section, which also allows the irrigation water to leach.

Once the support has been fixed in position on the production bar, a funnel is positioned on it to ensure that all the irrigation water is used, with the crop then being transferred all along the modular structure, without the need for the plants to be trained, with the result that once the growing units have been loaded on the production bars, they are placed by means of a hoist one by one at the start of the line in a waiting area, moving forward by gravity by one position per day until they are positioned with a lifting/lowering system.

As they develop, the growing units, which are positioned vertically, extend beyond the height of the support and continue to grow downwards, as the strength of the root system enables this.

### Phase involving distribution by level and row, vegetative growth and maturing

Each of the production bars located in the waiting area is transported by means of a lifting/lowering system, through an auger or a commercial stacker crane, located at each end of the modular structure, with the growing units continuing in their development, flowering and maturing of the fruit, the production bars advancing as a result of gravity by means of the rail system, at a rate of one position per day, along the entire length of the modular structure, during the days for which the process lasts.

### Phase involving irrigation and inspection:

The irrigation of the growing units positioned on their respective supports inserted on the production bars is automatically controlled throughout the modular structure by means of an irrigation controller, with a moisture controller being optionally included at various points for its control.

During the irrigation of the growing units, the leaching of the irrigation water is channelled through the pipe sections of the supports, running from the production bars to a channel built into the modular structure, carrying the water for its re-use.

The process in this phase involves the continuous inspection and checking of the development of the growing units through inspection platforms, built into a latticework structure that, operated electronically, passes with a moving motion along the modular structure, through aisles formed on both sides, the inspection platforms being capable of unfolding in order to allow the operator to access the growing units furthest from the aisle and inspect them.

### Phase involving end of guiding, transport of production bars and harvesting:

When the cycle has been completed, the production bars corresponding to daily production reach the end of the guides and are moved to the bottom floor by the lifting/lowering system one by one and are positioned in the picking area in the order given by said process, with various tasks then being carried out: continuous inspection, selection and picking of the fruit, which is deposited once it is picked in a channel of water for washing, with the result that as the fruit floats on the water, it cannot bump against each other, thus remaining undamaged, with the selected fruit then being positioned so that it can be dried, processed, packaged, stored and dispatched.

Finally, the waste is cleared and removed, being deposited in suitable containers in order to be dried and then processed in a grinder unit.

### Phase involving the cleaning and preparation of production bars and seed trays:

Once the fruit has been unloaded during harvesting, the supports of the production bars are stacked and transported in trolleys to a washing area of the modular structure, with the seed trays, after being emptied, also being taken to the same washing area, and the production bars also being transported to the same washing area, on rails through a transit area.

### Modular structure:

The modular structure for continuously growing an aeroponic crop is characterised in that it comprises structural elements positioned horizontally and vertically, forming a bottom floor and one or more successive floors, incorporating two aisles, one being located on the right side between rows one and two, and the other on the left side between rows three and four, with the two central rows - two and three - being connected, there being housed in each aisle a latticework structure, conducted on a guide system inserted into the modular structure itself.

The horizontal structural elements are disposed on the modular structure at a slight angle in order to facilitate the movement by gravity of the production bars, on a rail system inserted in the structure, with the irrigation system moving on the sides of the production bars by means of a track system.

The latticework structure comprises two columns that house between them an inspection platform, which moves with ascending and descending vertical movements in order to enable the inspection of the status of the growing units, located on any of the floors comprised in the modular structure.

The inspection platform is disposed in its lower part with two surfaces of similar dimensions, which may be opened out from right to left to allow the operator to access the growing units furthest from the side aisles.

The irrigation system is made up of a support composed of a water pipe with a plurality of irrigation nozzles for the solution of water and nutrients, incorporating at its ends a track system that is automatically operated, so that it may be guided on the ends of the production bars.

The irrigation system provides a solution of water and nutrients in a completely automatic manner, especially adapted to the plant's maturing cycles, both in terms of the amount of each nutrient and in the physical properties of the solution.

The production bars are made up of two side sections disposed at both ends with a rolling system, being connected to each other by two transverse pipes separated from each other and centred at an equidistant distance, disposed with cavities designed for the insertion of the corresponding supports, which fix their position by means of a pipe section, which as well as fixing their position allows the leaching of the irrigation water, with the transverse pipes incorporating an internal channel designed to collect the water from the leaching and channel it for its re-use towards a channel positioned on the modular structure.

The support is made up of an internal cavity designed to house the growing unit and of two side extensions located in its lower part, designed to ensure its positioning on the transverse pipes.

The length dimensions of the production bars coincide with the dimensions between the vertical structural elements of the modular structure, and the width dimensions are configured to coincide with their daily advance during the procedure, corresponding to the maturing time.

The bottom floor comprises a planting area, seedbed area, waiting area, picking and dispatch area, a washing, drying and packaging area, an area for washing the production bars, their corresponding supports and seed trays and a trolley transit area, which are delimited for the development of the procedure being claimed, with successive levels being reserved for the crop-maturing procedure and for points of access for services, storage, loading and unloading of supplies, dispatch of the fruit and the entry/exit of personnel.

The planting area and the seedbed area are comprised, and connected to each other by means of an assembly line positioned on a bench placed at a slight angle for the sliding by gravity, of the seed trays, which are made up of a perforated plate provided with a plurality of cavities and incorporating in their rear part a drainage outlet for the removal of the excess irrigation water.

The width dimensions of the seed trays are configured in order to coincide with the daily advance, which coincides with the germination time.

The waiting area comprises a continuous line with rails, configured at a slight angle, positioned above the planting area and seedbed area, designed for the accumulation as a result of gravity of the production bars waiting to be transported to the successive production floors.

The picking area is positioned in parallel with the area for washing, drying and packaging the fruit, which comprises a water channel, a drying section and a final section for packaging, positioned in a continuous manner on an automatic assembly line.

The area for washing supports and seed trays collected in trolleys and production bars on rails comprises an automatic water sprinkler system for their maintenance, cleaning and sterilisation, which keeps them in perfect conditions of hygiene for their incorporation at the start of the procedure.

The dispatch area comprises various assembly lines designed to transport the packaged fruit to the fork-lift trucks or pallet trucks for their subsequent loading and grouping in distribution vehicles.

There are different storage areas: a climate-controlled store for the seeds, another for storing raw materials and a storage area for packaged fruit that is ready to be distributed.

The service areas are areas set aside for the maintenance of the facility, the offices and the laboratory.

The grinder unit is a machine located externally, close to the biomass and boiler area, designed to grind discarded waste, which is kept in containers until it is dried, and is stored once it has been ground, in a biomass tank to supply the boiler.

### Advantages of the invention

The procedure and modular structure for continuously growing an aeroponic crop, which is presented herein, provides a number of advantages in comparison to the procedures that are currently available, the most important of them being the intensification of the use of the ground, with the proposed development of an aeroponic crop procedure on various levels allowing its growth downwards, thereby avoiding the need to train the fruit and making maximum use of the area available, it being capable of being located on any type of ground, its use being rationalised for agricultural production and the optimisation of resources, with the creation of a quality product in a sustainable manner.

Another important advantage is that the modular structure comprises structural elements positioned horizontally and vertically, with the horizontal elements presenting a slight angle in order to enable the movement by gravity of the production bars by means of a rail system, thus allowing continuous production.

Another important advantage is that the modular structure incorporates two aisles, one located on the right side and the other on the left side, designed for the transit, by means of tracks, of a latticework structure that incorporates inspection platforms.

It should be added that another important advantage is that the implementation of the movement by gravity of most of the different elements included in the procedure significantly reduces the mechanisation of the procedure's facility, leading to very significant energy savings.

Another of the most important advantages is that the bottom floor comprises a planting area, seedbed area, waiting area, picking area, trolley transit area, area for washing the production bars and seed trays, a washing, drying and packaging area and a dispatch area, which are delimited for the development of the procedure being claimed, with successive levels being reserved for the procedure of the downward maturing of the crop and for points of access for services, storage, loading and unloading of supplies, dispatch of the fruit and the entry/exit of personnel

As an important advantage it should be added that the seed trays, located in the seedbed area, are made up of a perforated plate, provided with a plurality of cavities and incorporating in their rear part a drainage outlet for the removal of the excess irrigation water.

Another important advantage that should be pointed out is that both the production bars and the seed trays are configured in terms of their width with dimensions that coincide with their daily advance, which is related to the number of days needed for the fruit to ripen.

As an important advantage it should be pointed out that the production bars are made up of two side sections disposed at both ends with a rolling system, being connected to each other by two transverse pipes separated from each other and centred at an equidistant distance, disposed with cavities designed for the insertion of supports, fixed to it by means of a pipe section.

Finally, a further advantage is that the support of the production bars is designed to house the production units throughout the entire production process.

### Description of the figures

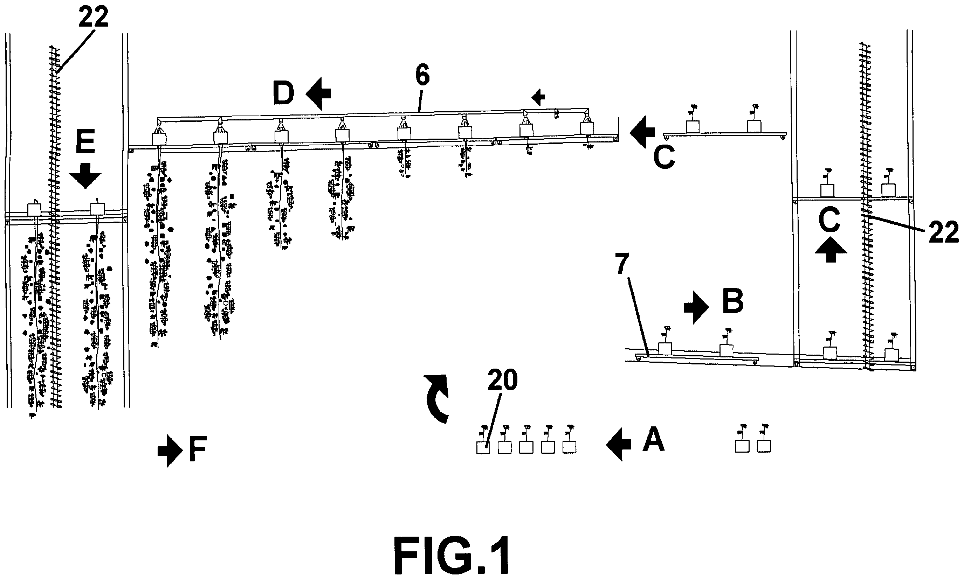

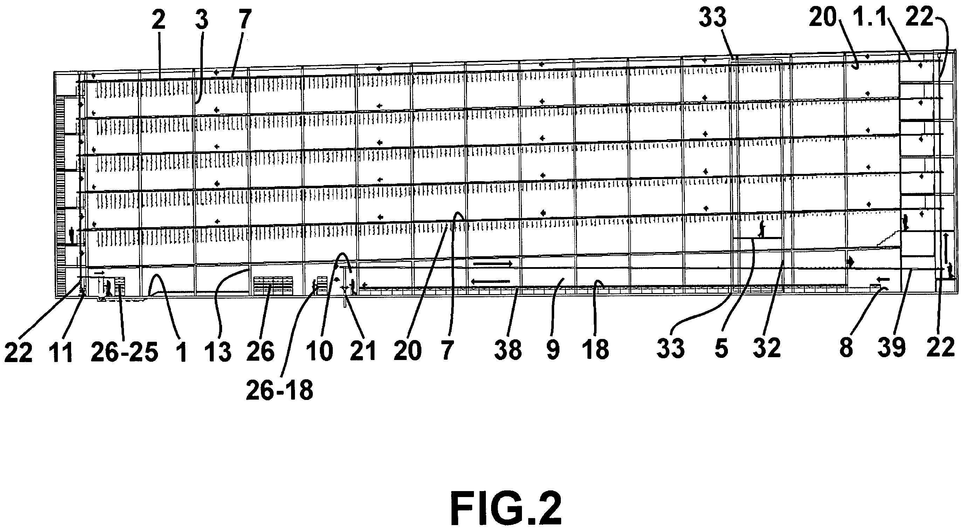

To provide a better understanding of the object of the present invention, a preferred practical embodiment of said invention is shown in the drawings attached.
In said drawings Figure 1 shows a schematic view of the different phases comprised in the procedure for continuously growing an aeroponic crop, with A corresponding to the phase involving the preparation of the seeding area, positioning on the line and germination, B to the phase involving transfer and positioning on production bars, C to the phase involving distribution by level and row, vegetative growth and maturing, D to the phase involving irrigation and inspection, E to the phase involving end of guiding, transport of production bars and harvesting, and F to the phase involving the cleaning and preparation of production bars and seed trays
Figure 2 shows an elevated view of the modular structure for continuously growing an aeroponic crop, above the ground, showing the inspection platform included in a latticework structure.

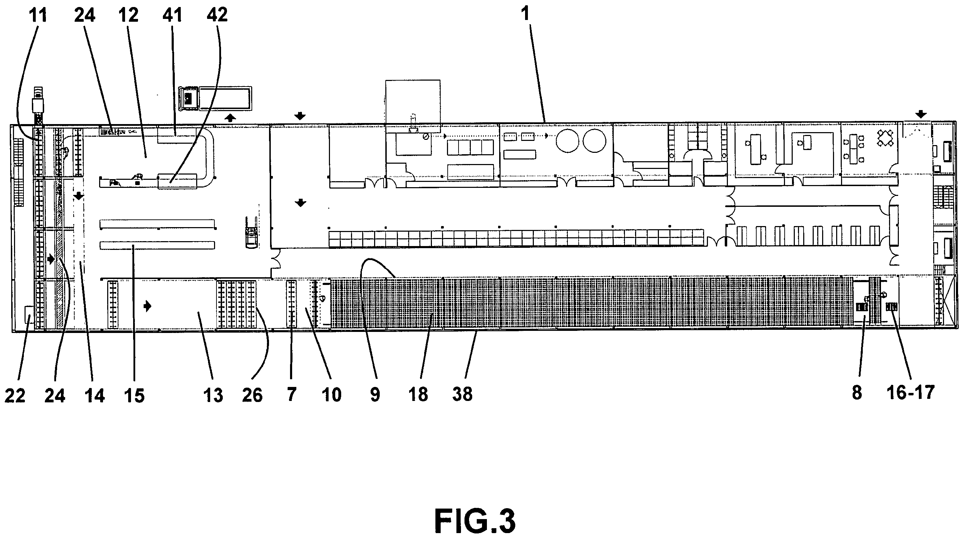

Figure 3 shows a view of the bottom floor, showing the different areas and devices included in it.

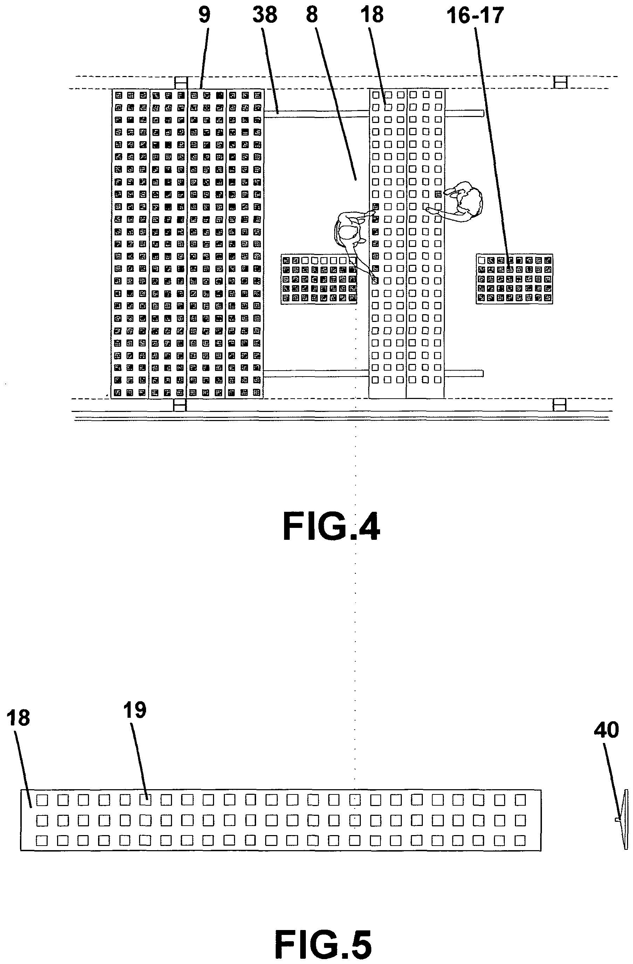

Figure 4 shows a detail of the seedbed and planting area, showing how the seed trays are handled.
Figure 5 shows a plan view and profile view of the seedbed tray.

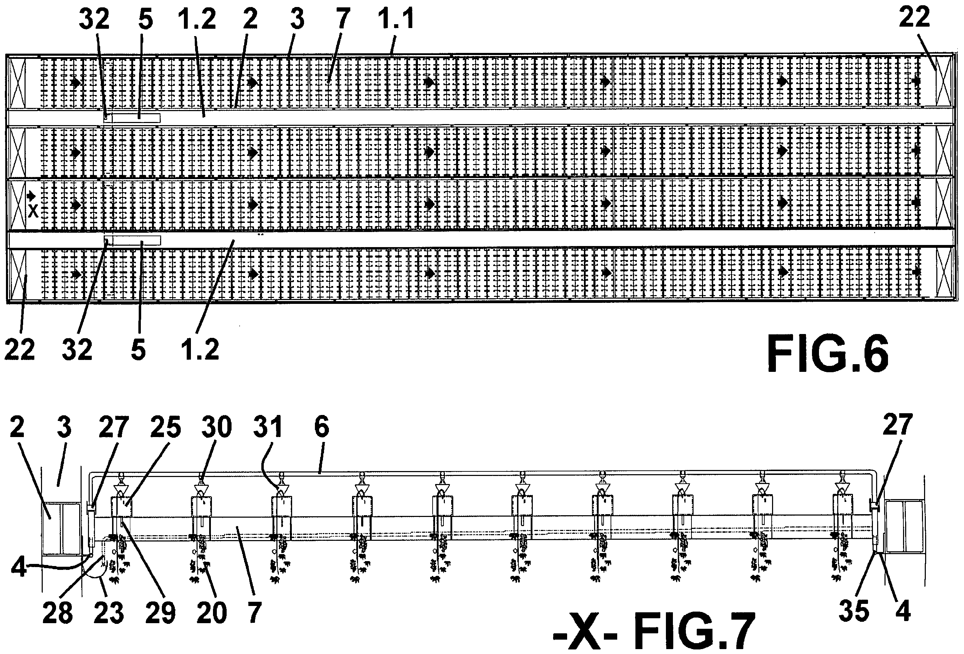

Figure 6 shows a plan view of one of the levels of the modular structure, showing the space set aside for the production bars containing growing units and the two side aisles set up to allow the movements of the latticework structure.
Figure 7 shows a detail of the assembly of the irrigation system and production bars on the rail system of the modular structure, showing the guiding of the irrigation system on the sides of the production bar and the leaching of the irrigation water.

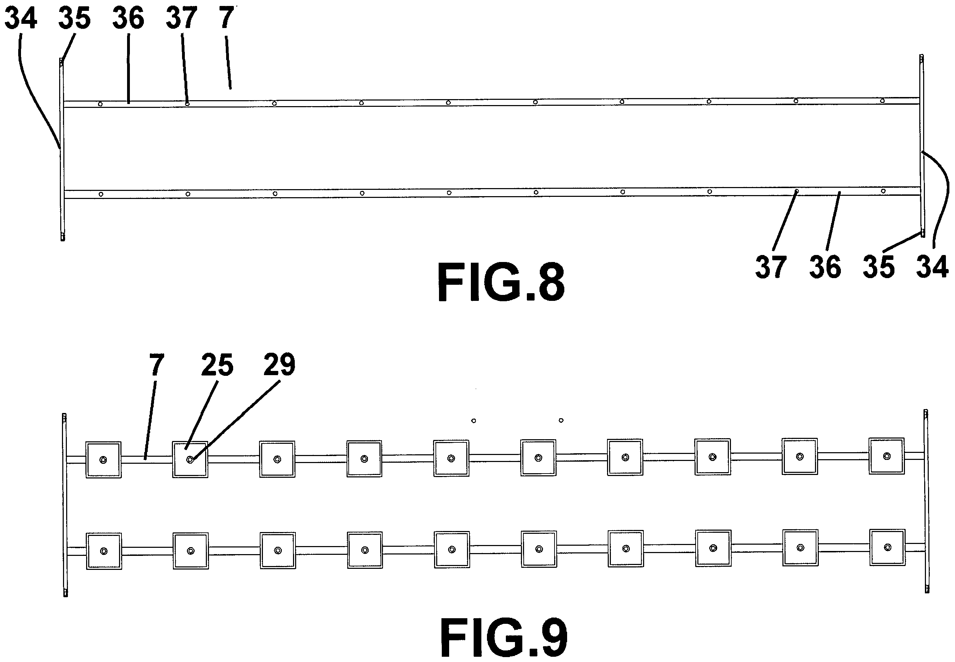

Figure 8 shows a plan view of a production bar.
Figure 9 shows a plan view of production bar with the supports incorporated.

### Preferred embodiment of the invention

The continuous aeroponic crop procedure, which is presented herein, comprises the following phases:
- Phase involving the preparation of the seeding area, positioning on the line and germination.
- Phase involving transfer and positioning on production bars.
- Phase involving distribution by level and row, vegetative growth and maturing.
- Phase involving irrigation and inspection.
- Phase involving guiding, transport of production bars and harvesting.
- Phase involving the cleaning and preparation of production bars and seed trays.

These phases initially take place on the bottom floor (1) and during maturing on one or more successive floors (1.1) of a modular structure above the ground or beneath it.

### Phase involving the preparation of the seeding area, positioning on the line and germination:

The seeds (16) and the substrate (17) are transported and placed in a planting area (8), with, first of all, the substrate (17) and then the seeds (16) being deposited in the corresponding cavities of the seed trays (18), the first irrigation being conducted, with the growing units (20) being created as a result, and the seed trays (18) then being positioned in a seedbed area (9), planted as a continuous line, with their advance, by gravity, corresponding to one position per day, in accordance with their width dimensions, with the necessary days being allowed for the germination and development of the growing units (20), with plants being obtained every day at the end of the germination cycle, while the growing units (20) increase in number in order to make up for defects in certain specimens that do not complete the germination and growth process satisfactorily.

### Phase involving transfer and positioning on production bars:

The growing units (20) are removed from the seed trays (18) and repositioned in the internal cavity of a support (25) designed to be positioned on the production bars (7) for their subsequent development, their position being fixed on the production bars (7) by means of a pipe section (29), which also allows the irrigation water to leach, with, once the support (25) has been fixed in position on the production bar (7), a funnel (31) being positioned on it and being intended to ensure that all the irrigation water is used, with the crop then being transferred all along the modular structure, without the need for the plants to be trained, with the result that once the growing units (20) have been loaded on the production bars (7) they are placed by means of a lift (21) one by one at the start of the line, in a waiting area (10), moving forward by gravity by one position per day until they are positioned with a lifting/lowering system (22).

As they develop, the growing units (20), which are positioned vertically, extend beyond the height of the support (25) and continue to grow downwards, as the strength of the root system enables this.

### Phase involving distribution by level and row, vegetative growth and maturing:

Each of the production bars (7) located in the waiting area (10) advances by gravity by one position per day, until being positioned with a lifting/lowering system (22), auger or commercial stacker crane, located at each end of the modular structure, for their transport to the corresponding successive floor (1.1), with the production bars (7) being positioned until daily production is completed, the growing units (20) continuing in their development, flowering and maturing of the fruit, with the production bars (7) advancing by means of the rail system (4), at a rate of one position per day, along the entire length of the modular structure, during the days for which this process lasts.

### Phase involving irrigation and inspection:

Irrigation is carried out automatically by means of an irrigation controller, with a moisture controller being optionally included at various points of the modular structure for its control, with the leaching of the irrigation water of the growing units (20) being channelled from the production bars (7), through the pipe sections (29) of the supports (25) and its own internal pipes, towards a channel (23) incorporated in the modular structure, carrying the water for its re-use, with the production process being checked by means of a latticework structure (32) with an inspection platform (5) that, operated electronically, passes with a moving motion along the modular structure through aisles (1.2) formed on both sides so that the operator can inspect the status of the growing units (20).

### Phase involving guiding, transport of production bars and harvesting:

When the cycle has been completed, the production bars (7) corresponding to daily production reach the end of the guides and are moved to the bottom floor (1) by the lifting/lowering system (22) one by one and are positioned in the picking and dispatch area (11) in the order given by said process, with various tasks then being carried out: continuous inspection, selection and picking of the fruit, which is deposited once it is picked in a channel of water (24) in the washing, drying and packaging area (12), with the selected fruit then being positioned so that it can be dried, processed, packaged, stored and dispatched.

The waste is cleared and removed, being deposited in suitable containers in order to be dried and then processed in a grinder unit.

### Phase involving the cleaning and preparation of production bars and seed trays:

Once the fruit has been unloaded during harvesting, the supports (25) of the production bars (7) are stacked and transported in trolleys (26) to a washing area (13), as are the seed trays (18) after being emptied, with the production bars (7) being transported to the same washing area (13), guided on rails through a transit area.

### Modular structure:

The modular structure for continuously growing an aeroponic crop comprises structural elements positioned horizontally (2) and vertically (3), forming a bottom floor (1) and one or more successive floors (1.1), with the horizontal structural elements (2) presenting a slight angle to facilitate continuous production by gravity, on a rail system (4), designed to guide the production bars (7).

The modular structure incorporates two aisles (1.2), one being located on the right side between rows one and two, and the other on the left side between rows three and four, with the two central rows - two and three - being connected, there being housed in each aisle a latticework structure (32), conducted on a guide system (33) inserted into the modular structure itself.

The latticework structure (32) comprises two columns that house between them an inspection platform (5), which moves with ascending and descending vertical movements in order to enable the inspection of the status of the growing units, located on any of the successive floors (1.1) comprised in the modular structure.

The inspection platform (5) is disposed in its lower part with two surfaces of similar dimensions, which may be opened out from right to left to allow the operator to access the growing units furthest from the aisles (1.2).

The irrigation system is made up of a support composed of a water pipe with a plurality of irrigation nozzles (30) for the solution of water and nutrients, incorporating at its ends a track system (27) that is automatically operated so that it may be guided on the ends of the production bars (7).

The production bars (7) are made up of two side sections (34) disposed at both ends with a rolling system (35), being connected to each other by two transverse pipes (36) separated from each other and centred at an equidistant distance, disposed with cavities (37) designed for the insertion of supports (25), which fix their position by means of a pipe section (29), which as well as fixing their position allows the leaching of the irrigation water, with the transverse pipes (36) incorporating an internal channel (28) designed to collect the water from the leaching and channel it for its re-use towards a channel (23) positioned on the modular structure.

The support (25) is made up of an internal cavity designed to house the growing unit and of two side extensions located in its lower part, designed to ensure their positioning on the transverse pipes (36).

The length dimensions of the production bars (7) coincide with the dimensions between the vertical structural elements (3) of the modular structure, and the width dimensions are configured to coincide with their daily advance during the procedure, corresponding to the maturing time.

The bottom floor (1) comprises a planting area (8), seedbed area (9), waiting area (10), picking and dispatch area (11), a washing, drying and packaging area (12), a washing area (13) for the production bars (7) and seed trays (18), and a trolley transit area (14), which are delimited for the development of the procedure.

The planting area (8) and seedbed area (9) are comprised, and connected to each other by means of an assembly line (38) positioned on a bench that moves forward by the action of gravity, of seed trays (18), which are made up of a perforated plate provided with a plurality of cavities (19), and incorporating in their rear part a drainage outlet (40) for the removal of the excess irrigation water, its width dimensions corresponding with the daily advance coinciding with the germination time.

The waiting area (10) comprises a continuous line (39) with rails, configured with a slight angle of advance by gravity, positioned above the planting area (8) and seedbed area (9).

The picking and dispatch area (11) is positioned in parallel with the area for washing, drying and packaging the fruit (12), which comprises a water channel (24), a drying section (41) and a final section (42) for packaging, positioned in a continuous manner on an automatic assembly line, also including various distribution lines (15) designed for the dispatch of the fruit.

The washing area (13) for the production bars (7) supports (25) and seed trays (18) comprises an automatic water sprinkler system for cleaning and sterilisation.

## Claims

1. Method for continuously growing an aeroponic crop, comprising the following phases:
- phase involving the preparation of the seeding area, positioning on the line and germination;
- phase involving transfer and positioning on production bars;
- phase involving distribution by level and row, vegetative growth and maturing;
- phase involving irrigation and inspection;
- phase involving guiding, transport of production bars and harvesting; and,
- phase involving the cleaning and preparation of production bars and seed trays;
wherein these phases initially take place on the bottom floor (1) and during maturing on one or more successive floors (1.1) of a modular structure positioned above the ground or beneath it; and wherein the phase involving the preparation of the seeding area, positioning on the line and germination, the seeds (16) and the substrate (17) are collected and placed in a planting area (8), with, first of all, the substrate (17) and then the seeds (16) being deposited in the corresponding cavities of the seed trays (18), the first irrigation being conducted, creating as a result a growing unit (20), and the seed trays (18) then being positioned in a seedbed area (9), planted as a continuous line, with their advance, by gravity, corresponding to one position per day, in accordance with their width dimensions, with the necessary days being allowed for the germination and development of the growing units (20), with plants being obtained every day at the end of the germination cycle, while the growing units (20) are increased in number in order to make up for defects in certain specimens that do not complete the germination and growth process satisfactorily.

2. Method for continuously growing an aeroponic crop, according to claim 1, **characterised in that** the substrate (17) used is a processed inorganic substrate.

3. Method for continuously growing an aeroponic crop, according to claim 1, **characterised in that** in the phase involving the transfer and positioning of production bars, the growing units (20) are removed from the seed trays (18) and repositioned in the internal cavity of a support (25) designed to be positioned on the production bars (7) for their subsequent development, with the positioning and fixing tasks being carried out, the growing unit (20) being positioned vertically, with the result that as it develops, it extends beyond the height of the support (25), continuing to grow downwards, then, after the position of the support (25) has been fixed on the production bar (7), by means of a pipe section (29), a funnel (31) is placed on it, being designed to ensure that all the irrigation water is used, with the crop then being transferred all along the modular structure, with the result that once the growing units (20) have been loaded on the production bars (7), they are placed by means of a lift (21) one by one at the start of the line in a waiting area (10), moving forward by gravity by one position per day until they are positioned with a lifting/lowering system (22).

4. Method for continuously growing an aeroponic crop, according to claim 1, **characterised in that** in the phase involving distribution by level and row, vegetative growth and maturing, each of the production bars (7) located in the waiting area (10) advances by gravity by one position per day, until being positioned with a lifting/lowering system (22), auger or commercial stacker crane, located at each end of the modular structure, for their transport to the corresponding successive floor (1.1), with the production bars (7) being positioned until daily production is completed, the growing units (20) continuing in their development, flowering and maturing of the fruit, with the production bars (7) advancing by means of the rail system (4), at a rate of one position per day, along the entire length of the modular structure, during the days for which the process lasts.

5. Method for continuously growing an aeroponic crop, according to claim 1, **characterised in that** in the phase involving irrigation and inspection, irrigation is carried out automatically by means of an irrigation controller, with a moisture controller being optionally included at various points of the modular structure for its control, with the leaching of the irrigation water of the growing units (20), being channelled from the production bars (7), through the pipe sections (29) of the supports (25) and its own internal pipes, towards a channel (23) incorporated in the modular structure, carrying the water for its re-use, with the production process being checked by means of a latticework structure (32) with an inspection platform (5) that, operated electronically, passes with a moving motion along the modular structure, through aisles (1.2) formed on both sides so that the operator can inspect the status of the growing units (20).

6. Method for continuously growing an aeroponic crop according to claim 1, **characterised in that** in the phase involving the end of guiding, transport of production bars and harvesting, when the cycle has been completed, the production bars (7) corresponding to daily production reach the end of the guides and are moved to the bottom floor (1) by the lifting/lowering system (22) one by one and are positioned in the picking and dispatch area (11) in the order given by said process, with various tasks then being carried out: continuous inspection, selection and picking of the fruit, which is deposited once it is picked in a channel of water (24) for pre-washing, with the selected fruit then being dried, processed, packaged, stored and finally dispatched, immediately followed by the clearing and removal of the waste, it being deposited in suitable containers in order to be dried and then processed in a grinder unit.

7. Method for continuously growing an aeroponic crop, according to claim 1, **characterised in that** in the phase involving the cleaning and preparation of production bars (7) and seed trays (18), once unloaded during harvesting, the supports (25) of the production bars (7) are stacked and transported in trolleys (26) to a washing area (13) of the modular structure, through a trolley transit area (14), and wait for a new load to start the process, with the seed trays (18) also being collected after being emptied, transported to the washing area (13) for their cleaning and disinfection, with the production bars (7) being transported to the same washing area (13), guided on rails through a transit area.

8. Modular structure for continuously growing an aeroponic crop according to the method of any of claims 1-7, wherein it comprises structural elements positioned horizontally (2) and vertically (3), forming a bottom floor (1) and one or more successive floors (1.1), with the horizontal structural elements (2) presenting a slight angle to facilitate continuous production by gravity, on a rail system (4), one rail designed for inspection platforms (5), another for an irrigation system (6) and another for production bars (7), also incorporating two aisles (1.2), one being located on the right side between rows one and two, and the other on the left side between rows three and four, with the two central rows - two and three - being connected, there being housed in each aisle a latticework structure (32), conducted on a guide system (33) inserted into the modular structure itself; further, the modular structure comprises a planting area (8) and a seedbed area (9), the planting area (8) and the seedbed area (9) being connected to each other by means of an assembly line (38) positioned on a bench - moved forward by gravity - of seed trays (18), which are made up of a perforated plate provided with a plurality of cavities (19), incorporating in their rear part drainage outlet (40) for the removal of the excess irrigation water, its width dimensions corresponding with the daily advance coinciding with the germination time.

9. Modular structure, according to claim 8, **characterised in that** the latticework structure (32) comprises two columns, which house between them an inspection platform (5), being disposed in its lower part with two surfaces of similar dimensions, which may be opened out from right to left, the irrigation system (6) being made up of a support composed of a water pipe with a plurality of irrigation nozzles (30) for the solution of water and nutrients, incorporating at its ends a track system (27), that is automatically operated so that it may be guided on the ends of the production bars (7), the production bars (7) being made up of two side sections (34) disposed at both ends with a rolling system (35), being connected to each other by two transverse pipes (36) separated from each other and centred at an equidistant distance, disposed with cavities (37) for the insertion of supports (25) fixed by means of a pipe section (29), with the transverse pipes (36) incorporating an internal channel (28) designed to collect the water from the leaching and channel it for its re-use towards a channel (23) positioned on the modular structure, the length dimensions of the production bars (7) corresponding with the dimensions between vertical structural elements (3), the support (25) being made up of an internal cavity and of two side extensions located in its lower part, for positioning on the transverse pipes (36).

10. Modular structure, according to claim 8, **characterised in that** the bottom floor (1) comprises a planting area (8), seedbed area (9), waiting area (10), picking and dispatch area (11), a washing drying and packaging area (12), an area (13) for washing the production bars (7), supports (25) and seed trays (18) and a trolley transit area (14), delimited for the development of the procedure.

11. Modular structure, according to claim 8, **characterised in that** the waiting area (10) comprises a continuous line (39) with rails, configured with a slight angle of advance by gravity, positioned above the planting area (8) and seedbed area (9).

12. Modular structure, according to claim 8, **characterised in that** the picking and dispatch area (11) is positioned in parallel with the area for washing, drying and packaging the fruit (12), which comprises a water channel (24), a drying section (41) and a final section (42) for packaging, positioned in a continuous manner on an automatic assembly line, also including various distribution lines (15).

13. Modular structure, according to claim 8, **characterised in that** the area (13) for washing production bars (7) supports (25) and seed trays (18) comprises an automatic water sprinkler system for cleaning and sterilisation.

## Patentansprüche

1. Verfahren zur kontinuierlichen Züchtung einer aeroponischen Kultur, mit den folgenden Phasen:
- einer Phase, die Vorbereitung des Saatsbereichs, Positionierung in der Linie und Keimung beinhaltet;
- einer Phase, die Übertragung und Positionierung auf Produktionsstäben beinhaltet;
- eine Phase, die Verteilung nach Höhe und Reihe, pflanzliches Wachstum und Reifung beinhaltet;
- eine Phase, die Bewässerung und Inspektion beinhaltet;
- eine Phase, die Führung, Transport von Produktionsstäben und Ernte beinhaltet; und
- eine Phase, die Reinigung und Vorbereitung von Produktionsstäben und Saatschalen beinhaltet;
wobei diese Phasen anfänglich auf dem untersten Stockwerk (1) stattfinden und während des Reifens auf einem oder mehreren nachfolgenden Stockwerken (1.1) einer modularen Struktur, die über dem Boden oder darunter angeordnet ist, stattfinden; und wobei in der Phase, die die Vorbereitung des Saatbereichs, Positionierung auf der Linie und die Keimung betrifft, diese Saaten (16) und das Substrat (17) gesammelt und in einem Pflanzbereich (8) gesammelt werden, wobei als erstes das Substrat (17) und anschließend die Saaten (16) in entsprechenden Aussparungen der Saatschalen (18) abgelegt werden, wobei die erste Bewässerung ausgeführt wird, wodurch als Folge davon eine wachsende Einheit (20) erzeugt wird, und wobei die Saatschalen (18) anschließend in einem Saatbettbereich (9) positioniert werden, als eine kontinuierliche Linie gepflanzt werden, wobei ihr Voranschreiten durch Schwerkraft einer einzelnen Position pro Tag entsprechend ihren Breitenabmessungen entspricht, wobei die erforderlichen Tage für die Keimung und die Entwicklung der wachsenden Einheiten (20) bereitgestellt werden, wobei am Ende des Keimungszyklus Pflanzen an jeden Tag erhalten werden, während die wachsenden Einheiten (20) in ihrer Anzahl erhöht werden, um Defekte bei gewissen Sorten auszugleichen, die den Keimungs- und Züchtungsvorgang nicht in zufriedenstellender Weise abschließen.

2. Verfahren zum kontinuierlichen Züchten einer aeroponischen Kultur nach Anspruch 1, **dadurch gekennzeichnet, dass** das Substrat (17) als ein bearbeitetes anorganisches Substrat verwendet wird.

3. Verfahren zum kontinuierlichen Züchten einer aeroponischen Kultur nach Anspruch 1, **dadurch gekennzeichnet, dass** in der Phase, die Übertragung und die Positionierung der Produktionsstäbe beinhaltet, die wachsenden Einheiten (20) aus den Saatschalen (18) entfernt und in der inneren Aussparung einer Halterung (25) neu positioniert werden, die dafür ausgestattet ist, auf den Produktionsstäben (7) zur nachfolgenden Entwicklung positioniert zu werden, wobei die Aufgaben zur Positionierung und Befestigung ausgeführt werden, wobei die wachsende Einheit (20) vertikal positioniert wird mit dem Ergebnis, dass sie sich bei ihrer Entwicklung über die Höhe der Halterung (25) hinaus erstreckt, und anschließend nach unten weiter wächst, und danach, nachdem die Position der Halterung (25) an dem Produktionsstab (7) fixiert ist, mittels eines Leitungsabschnitts (29) ein Trichter (31) darauf angeordnet wird, der so ausgebildet ist, dass sichergestellt ist, dass das gesamte Wasser der Bewässerung verwendet wird, wobei die Kultur dann insgesamt auf die molekulare Struktur übertragen wird mit dem Ergebnis, dass, sobald die wachsenden Einheiten (20) auf die Produktionsstäbe (7) geladen sind, sie mittels einer Hebeeinrichtung (21) nacheinander zum Anfangspunkt der Linie in einem Wartebereich (10) angeordnet werden und sich durch Schwerkraft um eine Position pro Tag weiter bewegen, bis sie mit einem Hebe/Absenk-System (22) positioniert werden.

4. Verfahren zum kontinuierlichen Züchten einer aeroponischen Kultur nach Anspruch 1, **dadurch gekennzeichnet, dass** in der Phase, die Verteilung nach Höhe und Reihe, plnazliches Wachsen und Reifung beinhaltet, jeder der Produktionsstäbe (7), der in dem Wartebereich (10) angeordnet ist, durch Schwerkraft um eine Position pro Tag weiter wandert, bis er mit einem Hebe/Absenk-System (22), einem Schneckenförderer oder einem konventionellen Staplerkran, der an jedem Ende der modularen Struktur angeordnet ist, für den Transport zu dem entsprechenden nachfolgenden Stockwerk (1.1) positioniert wird, wobei die Produktionsstäbe (7) solange positioniert werden, bis die tägliche Produktion abgeschlossen ist, wobei die wachsenden Einheiten (20) ihre Entwicklung fortsetzen, mit Blühen und Reifen der Früchte, wobei die Produktionsstäbe (7) mittels des Schienensystems (4) mit einer Geschwindigkeit von einer Position pro Tag entlang der gesamten Länge der modularen Struktur, während der Tage, in denen der Prozess andauert, weiter wandern.

5. Verfahren zum kontinuierlichen züchten einer aeroponischen Kultur nach Anspruch 1, **dadurch gekennzeichnet, dass** in der Phase, die Bewässerung und Inspektion beinhaltet, die Bewässerung automatisch mittels einer Bewässerungssteuerung ausgeführt wird, wobei eine Feuchtigkeitssteuerung funktionsmäßig an diversen Punkten der modularen Struktur zu deren Steuerung vorgesehen ist, wobei das durchsickernde Wasser der Bewässerung der wachsenden Einheiten (20) von den Produktionsstäben (7) durch die Leitungsabschnitte (29) der Halterungen (25) und ihrer eigenen internen Leitungen zu einem Kanal (23) geführt wird, der in der modularen Struktur enthalten ist, der das Wasser zur Wiederverwendung transportiert, wobei der Produktionsprozess mittels einer Gitterwerkstruktur (32) mit einer Inspektionsplattform (5) geprüft wird, die bei elektronischem Betrieb sich an der modularen Struktur durch Gänge (1.2) vorbeibewegt, die auf beiden Seiten ausgebildet sind, sodass der Bediener den Status der wachsenden Einheiten (20) inspizieren kann.

6. Verfahren zur kontinuierlichen Züchtung einer aeroponischen Kultur nach Anspruch 1, **dadurch gekennzeichnet, dass** in der Phase, die das Ende der Führung, den Transport von Produktionsstäben und die Ernte beinhaltet, bei Abschluss des Zyklus die Produktionsstäbe (7), die der täglichen Produktion entsprechen, das Ende der Führungen erreichen und zu dem untersten Stockwerk (1) mittels des Hebel/Absenk-Systems (22) nacheinander bewegt und in dem Pflück -und Ausgabebereich (11) in der durch den Prozess vorgegebenen Reihenfolge positioniert werden, wobei dann diverse Aufgaben ausgeführt werden: kontinuierliche Inspektion, Auswahl und Pflücken der Früchte, die nach ihrer Aufnahme in einem Kanal aus Wasser (24) für die Vorwäsche angeordnet werden, wobei die ausgewählten Früchte dann getrocknet, verarbeitet, verpackt, gelagert und schließlich abgegeben werden, woran sich unmittelbar die Reinigung und das Entfernen des Abfalls anschließen, wobei dieser in geeigneten Behältern gelagert wird, sodass er getrocknet und dann in einer Zerkleinerungseinheit verarbeitet wird.

7. Verfahren zur kontinuierlichen Züchtung einer aeroponischen Kultur nach Anspruch 1, **dadurch gekennzeichnet, dass** in der Phase, die die Reinigung und die Vorbereitung von Produktionsstäben (7) und Saatschalen (18) beinhaltet, nach dem Laden während der Ernte die Halterungen (25) der Produktionsstäbe (7) gestapelt und in Transportwägen (26) zu einem Waschbereich (13) der modularen Struktur durch einen Transportwagentransitbereich (14) transportiert werden und auf eine neue Ladung zum Starten des Prozesses warten, wobei die Saatschalen (18) ebenfalls nach ihrer Leerung gesammelt und zu dem Waschbereich (13) zur Reinigung und Desinfektion transportiert werden, wobei die Produktionsstäbe (7) zu dem gleichen Waschbereich (13) transportiert werden, und dabei auf Schienen durch einen Transitbereich geführt werden.

8. Modulare Struktur zum kontinuierlichen Züchten einer aeroponischen Kultur nach einem der Ansprüche 1-7, wobei sie Strukturelemente aufweist, die horizontal (2) und vertikal (3) angeordnet sind, wodurch ein unterstes Stockwerk (1) und ein oder mehrere nachfolgende Stockwerke (1.1) gebildet werden, wobei die horizontalen Strukturelemente (2) einen kleinen Winkel aufweisen, um eine kontinuierliche Produktion durch Schwerkraft auf einem Schienensystem (4) zu ermöglichen, wobei eine Schiene für Inspektionsplattformen (5) ausgebildet ist, eine weitere für ein Bewässerungssystem (6) und eine weitere für Produktionsstäbe (7) ausgebildet ist, wobei ferner zwei Gänge (1.2) enthalten sind, wobei einer auf der rechten Seite zwischen Reihe eins und zwei angeordnet ist, und der andere auf der linken Seite zwischen Reihe drei und vier angeordnet ist, wobei die beiden zentralen Reihen zwei und drei verbunden sind, wobei in jedem Gang eine Gitterwerkstruktur (32) untergebracht ist, die an einem Führungssystem (33), das in die modulare Struktur selbst eingeführt ist, geführt ist, wobei ferner die modulare Struktur einen Pflanzbereich (8) und einen Saatbettbereich (9) aufweist, wobei der Pflanzbereich (8) und der Saatbettbereich (9) mittels eines Fließbandes (38) aus Saatschalen (18) verbunden sind, das auf einer Bank angeordnet ist - durch Schwerkraft vorwärts bewegt wird -, wobei die Saatschalen aus einer perforierten Platte, die mit mehreren Aussparungen (19) versehen sind, hergestellt sind, die in ihrem hinteren Teil einen Drainageauslass (40) für das Entfernen des überschüssigen Bewässerungswassers aufweisen, dessen Breitenabmessungen dem täglichen Voranschreiten in Übereinstimmung mit der Keimzeit entsprechen.

9. Modulare Struktur nach Anspruch 8, **dadurch gekennzeichnet, dass** die Gitterwerkstruktur (32) zwei Spalten aufweist, die zwischen sich eine Inspektionsplattform (5) aufnehmen, die in ihrem unteren Teil mit zwei Oberflächen mit ähnlichen Abmessungen versehen ist, die von rechts nach links nach außen geöffnet werden können, wobei das Bewässerungssystem (6) aus einer Halterung aufgebaut ist, die aus einer Wasserleitung mit mehreren Bewässerungsdüsen (30) für eine Lösung aus Wasser und Nährstoffen zusammengesetzt ist, wobei an ihren Enden ein Spurfolgesystem (27) vorgesehen ist, das automatisch so betrieben wird, dass es an den Enden der Produktionsstäbe (7) geführt werden kann, wobei die Produktionsstäbe (7) aus zwei Seitenabschnitten (34) aufgebaut sind, die an beiden Enden mit einem Rollensystem (35) versehen sind, die miteinander durch zwei Querleitungen (36) verbunden sind, die voneinander beabstandet sind und mit gleichem Abstand zentriert sind, mit Aussparungen (37) für das Einführen von Halterungen (25) versehen sind, die mittels eines Leitungsabschnitts (29) befestigt sind, wobei die Querleitungen (36) einen Innenkanal (28) aufweisen, der dafür vorgesehen ist, das Wasser aus dem Durchsickern zu sammeln und dieses für eine Wiederverwendung in Richtung zu einem Kanal (23) zu führen, der auf der modularen Struktur angeordnet ist, wobei die Längsabmessungen der Produktionsstäbe (7) den Abmessungen zwischen vertikalen Strukturelementen (3) entsprechen, wobei die Halterung (25) aus einer inneren Aussparung und zwei Seitenerweiterungen aufgebaut ist, die an ihrem unteren Teil angeordnet sind, um die Querleitungen (36) zu positionieren.

10. Modulare Struktur nach Anspruch 8, **dadurch gekennzeichnet, dass** das unterste Stockwerk (1) einen Pflanzbereich (8), einen Saatbettbereich (9), einen Wartebereich (10), einen Pflück- und Abgabebereich (11), einen Bereich (12) zum Waschen, Trocknen und Verpacken, einen Bereich (13) zum Waschen der Produktionsstäbe (7), der Halterungen (25) und der Saatschalen (18) und einen Transportwagentransitbereich (14) aufweist, die entsprechend dem prozeduralen Ablauf abgegrenzt sind.

11. Modulare Struktur nach Anspruch 8, **dadurch gekennzeichnet, dass** der Wartebereich (10) ein zusammenhängendes Band (39) mit Schienen aufweist, das mit einem kleinen Winkel zur Weiterbewegung durch Schwerkraft versehen ist und über dem Pflanzbereich (8) und dem Saatbettbereich (9) angeordnet ist.

12. Modulare Struktur nach Anspruch 8, **dadurch gekennzeichnet, dass** der Pflück- und Abgabebereich (11) parallel zu dem Bereich zum Waschen, Trocknen und Verpacken der Früchte (12) angeordnet ist, der einen Wasserkanal (24), einen Trocknungsabschnitt (41) und einen Endabschnitt (42) zum Verpacken aufweist, die in zusammenhängender Weise auf einem automatischen Fließband, das ferner diverse Verteilungsbänder (15) aufweist, angeordnet sind.

13. Modulare Struktur nach Anspruch 8, **dadurch gekennzeichnet, dass** der Bereich (13) zum Waschen von Produktionsstäben (7), Halterungen (25) und Saatschalen (18) ein automatisches Wassersprinklersystem zum Reinigen und Sterilisieren aufweist.

## Revendications

1. Procédé pour faire pousser en continu une culture aéroponique comprenant les phases suivantes :
- phase impliquant la préparation de la zone de semis, le positionnement sur la ligne et la germination ;
- phase impliquant le transfert et le positionnement sur des barres de production ;
- phase impliquant la distribution par niveau et rangée, la croissance végétative et la maturation ;
- phase impliquant l'irrigation et l'inspection ;
- phase impliquant le guidage, le transport de barres de production et la récolte ; et,
- phase impliquant le nettoyage et la préparation de barres de production et de plateaux de semences ;
ces phases se déroulant initialement au niveau d'un plancher inférieur (1) et, pendant la maturation, sur un ou plusieurs étages successifs (1.1) d'une structure modulaire positionnée au-dessus du sol ou en dessous de celui-ci ; et durant la phase impliquant la préparation de la zone d'ensemencement, le positionnement sur la ligne et la germination, les graines (16) et le substrat (17) sont collectés et placés dans une zone de plantation (8), avec tout d'abord le substrat (17) puis les graines (16) déposés dans les cavités correspondantes des plateaux à graines (18), la première irrigation étant réalisée, créant ainsi une unité de croissance (20),
et les plateaux à graines (18) étant ensuite positionnés dans une zone semée (9), plantés en ligne continue, avec leur avance, par gravité, correspondant à une position par jour, en fonction de leurs dimensions en largeur, les jours nécessaires étant prévus pour la germination et le développement des unités en croissance (20), les plantes étant obtenues tous les jours à la fin du cycle de germination, tandis que les unités en croissance (20) sont augmentées en nombre afin de compenser les défauts de certains spécimens qui n'achèvent pas le processus de germination et de croissance de façon satisfaisante.

2. Procédé pour faire pousser en continu une culture aéroponique selon la revendication 1, **caractérisé en ce que** le substrat (17) utilisé est un substrat inorganique traité.

3. Procédé pour faire pousser en continu une culture aéroponique selon la revendication 1, **caractérisé en ce que**, dans la phase de transfert et de positionnement des barres de production, les unités en croissance (20) sont retirées des plateaux de semences (18) et repositionnées dans la cavité interne d'un support (25) conçu pour être positionné sur les barres de production (7) pour leur développement ultérieur, les tâches de positionnement et de fixation étant effectuées, l'unité en croissance (20) étant positionnée verticalement, avec le résultat qu'au fur et à mesure qu'elle se développe, elle s'étend au-delà de la hauteur du support (25), continuant à croître vers le bas, puis, après que la position du support (25) ait été fixée sur la barre de production (7), au moyen d'une portion de conduite (29), un entonnoir (31) est placé sur elle, étant conçu pour assurer que toute l'eau d'irrigation est utilisée, la culture étant ensuite transférée tout le long de la structure modulaire, avec le résultat qu'une fois les unités en croissance (20) chargées sur le barres de production (7), elles sont placées au moyen d'un ascenseur (21) une par une au début de la ligne dans une zone d'attente (10), avançant par gravité d'une position par jour jusqu'à ce qu'elles soient positionnées avec un système de levage / abaissement (22).

4. Procédé pour faire pousser en continu une culture aéroponique selon la revendication 1, **caractérisé en ce que**, dans la phase impliquant une répartition par niveau et rang, croissance végétative et maturation, chacune des barres de production (7) situées dans la zone d'attente (10) avance par gravité d'une position par jour, jusqu'à être positionnée avec un système de levage / abaissement (22), une vrille ou un transstockeur commercial, situé à chaque extrémité de la structure modulaire, pour leur transport vers l'étage successif correspondant (1.1), les barres de production (7) étant positionnées jusqu'à l'achèvement de la production journalière, les unités en croissance (20) poursuivant leur développement, leur floraison et leur maturation, les barres de production (7) avançant au moyen du système à rail (4), à raison d'une position par jour, sur toute la longueur de la structure modulaire, pendant les jours sur lesquels le processus dure.

5. Procédé pour faire pousser en continu une culture aéroponique selon la revendication 1, **caractérisé en ce que**, dans la phase impliquant une irrigation et une inspection, l'irrigation est réalisée automatiquement au moyen d'un contrôleur d'irrigation, avec un contrôleur d'humidité optionnellement inclut en différents points de la structure modulaire pour le contrôle de celle-ci, avec la lixiviation de l'eau d'irrigation des unités en croissance (20), canalisée depuis les barres de production (7), à travers les portions de canalisation (29) des supports (25) et ses propres canalisations internes, vers un canal (23) incorporé dans la structure modulaire, transportant l'eau pour sa réutilisation, le processus de production étant contrôlé au moyen d'une structure en treillis (32) avec une plate-forme d'inspection (5) qui, actionnée électroniquement, passe avec un mouvement de déplacement le long de la structure modulaire, à travers des allées (1.2) formées des deux côtés afin que l'opérateur puisse inspecter l'état des unités en croissance (20).

6. Procédé pour faire pousser en continu une culture aéroponique selon la revendication 1, **caractérisé en ce que**, dans la phase impliquant la fin du guidage, un transport des barres de production et la récolte, lorsque le cycle est terminé, les barres de production (7) correspondant à la production journalière atteignent l'extrémité des guides et sont déplacés un par un vers le plancher inférieur (1) par le système de levage / abaissement (22) et sont positionnés dans la zone de cueillette et d'expédition (11) dans l'ordre donné par ledit processus, avec divers tâches à effectuer ensuite : contrôle continu, sélection et cueillette du fruit, qui est déposé une fois cueilli dans un canal d'eau (24) pour le prélavage, le fruit sélectionné étant ensuite séché, traité, emballé, stocké et enfin expédié, immédiatement suivis du nettoyage et de l'enlèvement des déchets, ceux-ci étant déposés dans des conteneurs appropriés pour être séchés puis traités dans une unité de broyage.

7. Procédé pour faire pousser en continu une culture aéroponique selon la revendication 1, **caractérisé en ce que**, dans la phase impliquant le nettoyage et la préparation des barres de production (7) et des plateaux de semences (18), une fois déchargés durant la récolte, les supports (25) des barres de production (7) sont empilées et transportées dans des chariots (26) vers une zone (13) de lavage de la structure modulaire, à travers une zone de transit de chariot (14), et attendent une nouvelle charge pour commencer le processus, les plateaux (18) étant également collectés après avoir été vidés, transportés vers la zone de lavage (13) pour leur nettoyage et leur désinfection, les barres de production (7) étant transportées vers la même zone de lavage (13) guidées sur des rails à travers une zone de transit.

8. Structure modulaire pour la culture en continu une culture aéroponique conformément au procédé selon l'une quelconque des revendications 1 à 7, comprenant des éléments structurels disposés horizontalement (2) et verticalement (3), formant un plancher inférieur (1) et un ou plusieurs étages (1.1) successifs, avec les éléments structurels horizontaux (2) présentant un léger angle pour faciliter la production continue par gravité, sur un système à rail (4), un rail étant conçu pour des plates-formes d'inspection (5), un autre pour un système d'irrigation (6) et un autre pour des barres de production (7), comprenant également deux allées (1.2), l'une étant située du côté droit entre les rangées un et deux, et l'autre du côté gauche entre les rangées trois et quatre, avec les deux rangées centrales - deux et trois - étant connectés, une structure en treillis (32) étant logée dans chaque allée, menée sur un système de guidage (33) inséré dans la structure modulaire elle-même ; en outre, la structure modulaire comprend une zone de plantation (8) et une zone de semis (9), la zone de plantation (8) et la zone de semis (9) étant reliées entre elles au moyen d'une ligne d'assemblage (38) positionnée sur un banc - déplacé vers l'avant par gravité - de plateaux à graines (18), qui sont constitués d'une plaque perforée munie d'une pluralité de cavités (19), incorporant dans leur partie arrière une sortie de drainage (40) pour l'évacuation de l'excès d'eau d'irrigation, ses dimensions en largeur correspondant à l'avance journalière coïncidant avec le temps de germination.

9. Structure modulaire selon la revendication 8, **caractérisée en ce que** la structure en treillis (32) comprend deux colonnes, qui logent entre elles une plateforme d'inspection (5), comprenant, disposées dans sa partie inférieure, deux surfaces de dimensions similaires, aptes à être ouvertes de droite à gauche, le système d'irrigation (6) étant constitué d'un support composé d'une conduite d'eau avec une pluralité de buses d'irrigation (30) pour la solution d'eau et d'éléments nutritifs, incorporant à ses extrémités un système de suivi (27), qui est actionné automatiquement de manière à pouvoir être guidé sur les extrémités des barres de production (7), les barres de production (7) étant constituées de deux portions latérales (34) disposées aux deux extrémités avec un système de roulement (35), étant reliées l'une à l'autre par deux tubes transversaux (36) séparés l'un de l'autre et centrés à une distance équidistante, aménagés avec des cavités (37) pour l'insertion de supports (25) fixés au moyen d'une portion de tuyau (29), les tuyaux transversaux (36) incorporant un canal interne (28) conçu pour recueillir l'eau de la lixiviation et la canaliser pour la réutiliser vers un canal (23) positionné sur la structure modulaire, les dimensions en longueur des barres de production (7) correspondant aux dimensions entre des éléments de structure verticaux (3), le support (25) étant constitué d'une cavité interne et de deux extensions latérales situées dans sa partie inférieure, pour le positionnement sur les tuyaux transversaux (36).

10. Structure modulaire, selon la revendication 8, **caractérisée en ce que** le plancher inférieur (1) comprend une zone de plantation (8), une zone de semis (9), une zone d'attente (10), une zone (11) de cueillette et d'expédition, une zone (12) de lavage, séchage et conditionnement, une zone (13) pour laver les barres de production (7), des supports (25) et des plateaux de semences (18) et une zone de transit de chariot (14) délimitée pour le développement de la procédure.

11. Structure modulaire, selon la revendication 8, **caractérisée en ce que** la zone d'attente (10) comporte une ligne continue (39) à rails, configurée avec un léger angle d'avancement par gravité, positionnée au-dessus de la zone de plantation (8) et de la zone de semis (9).

12. Structure modulaire, selon la revendication 8, **caractérisée en ce que** la zone de cueillette et d'expédition (11) est positionnée en parallèle avec la zone (12) de lavage, séchage et conditionnement du fruit, qui comprend un conduit d'eau (24), une section de séchage (41) et une section finale (42) pour l'emballage, positionnées de manière continue sur une chaîne d'assemblage automatique, comprenant également diverses lignes de distribution (15).

13. Structure modulaire, selon la revendication 8, **caractérisée en ce que** la zone (13) de lavage des barres de production (7), des supports (25) et des plateaux à graines (18) comprend un système automatique de projection d'eau pour le nettoyage et la stérilisation.
